# EUROPEAN PATENT SPECIFICATION

(11) **EP 2 509 898 B1**
(45) Date of publication and mention of the grant of the patent: **23.01.2019**
(21) Application number: 10836287.2
(22) Date of filing: 06.12.2010
(51) Int. Cl.: B65G 61/00, B65D 19/38, B65G 47/90, B23Q 7/14

(54) **ARRANGEMENT AND SYSTEM FOR DISTRIBUTION OF COMPONENTS TO SETS OF MATERIAL**
ANORDNUNG UND SYSTEM ZUR VERTEILUNG VON KOMPONENTEN AUF MATERIALSÄTZE
AGENCEMENT ET SYSTÈME POUR LA DISTRIBUTION DE COMPOSANTS À DES JEUX DE MATÉRIAUX

(30) Priority: 08.12.2009 SE 0950945
(43) Date of publication of application: 17.10.2012
(73) Proprietor: Väderstad Holding AB, 590 21 Väderstad (SE)
(72) Inventor: STARK, Andreas, S-590 21 Väderstad (SE)
(74) Representative: AWA Sweden AB
(86) International application number: PCT/SE2010/051344
(87) International publication number: WO 2011/071443

(56) References cited:
- EP-A1- 0 958 207
- EP-A2- 0 229 244
- EP-A2- 0 960 687
- WO-A1-2008/068264
- WO-A1-2011/098464
- DE-U1-202007 016 549
- FR-A1- 2 673 923
- US-A- 5 271 139
- US-A1- 2001 022 932
- US-A1- 2007 207 027
- US-B1- 6 340 282

## Description

### Technical Field

The present invention relates to a method and a system for distributing components to material kit carriers. The invention is applicable in systems for materials handling used in or adapted for the manufacturing industry, and is particularly suitable for supplying components in the form of material kit carriers to a number of assembly stations.

### Background Art

Many agricultural implements, such as harrows, ploughs, cultivators, seeders and the like, comprise a frame structure which is made up of a plurality of parts of bar material which have been joined together. Examples of such bar materials are flat bars, angle bars, girders and pipes of circular or polygonal cross-section. The bar material can be solid or hollow. The bar material is usually steel, but may also be aluminium or plastic.

Typically the frame is manufactured using raw material in the form of standard length bar material, which is cut to the appropriate length at a first station and, if necessary, provided with recesses, slots or holes. By utilizing 3D laser cutting the operations of cutting and of forming recesses, slots or holes can be performed at a single station. Bar material that has been cut to size and, if necessary, provided with recesses, slots and/or holes in the manner described above will be referred to below as a "component".

Production within the engineering industry has been rationalized and automated over a period of many years. In recent years there has been a shift from mass production to what is referred to as "single piece flow", where units and components of different types are manufactured one at a time, and often made to order. This approach has been adopted by many different industries today.

This means that in order to manufacture for example implements with welded frames, you need to be able to supply welding stations with kits comprising precisely those frame parts that are required in order to weld a particular or unique frame.

In traditional batch production a plurality of identical components are typically produced and each component type is stored in a designated location of an intermediate storage facility. In order to manufacture a frame, components are then fetched from various locations in the storage facility so as to form a kit of material, which is transferred to the site where the frame is to be assembled.

Considering the vast range of products of multiple designs that are in demand on the market today, large stocks are needed and the risk of scrap-page and rejection is considerable. It is therefore desirable to develop new systems. All over the world production processes are being improved under the concept of "Lean Production", which means *inter alia* that extremely effective production systems are developed where the "Single Piece Flow" approach plays an important role.

When supplying material in a manufacturing process stock value should be kept as low as possible. The stock value of cut parts, i.e. components, is higher than that of the corresponding amount of raw material. Furthermore, the raw material is more flexible since it is not until it has been cut to size that the use thereof becomes limited to a certain product. In addition, raw material can be sold at a higher price than components, which normally can only be sold as scrap.

It is also desirable that the stored components should already be on order, i.e. components should not be cut to size until the product has been ordered.

It is further desirable to collect components in material kit carriers, which can then be transferred to the site where assembly is to take place, as described above.

Finally, it is desirable to optimize raw material usage. This can be achieved by planning the cutting of each piece of raw material (a bar, a pipe, etc.) based on existing orders. Thus, when cutting a piece of raw material components for a number of products can be formed in one and the same operation. In this connection, it is desirable to be able to distribute the cut components directly to material kit carriers for each product. This means that it is desirable to be able to distribute components from a cutting station to a large number of material kit carriers.

It is known in the art to use a robot to distribute, at a processing station such as a saw, lathe or milling cutter, processed components one by one directly to a plurality of material kit carriers.

Moreover, EP0229244A2 discloses a method for distributing components onto material kit carriers comprising: supplying, at a feed station, at least two components and arranging said components on at least one material kit carrier, such that each of said material kit carriers contains a plurality of said non-assembled components which are adapted to be joined together to form part of a predetermined product.

DE202007016549U U1 discloses a system for distributing components into material carriers, comprising: a feed station designed to supply at least two non-assembled components and to perform at least one machining operation on at least one of said components, and at least one material carrier located at a distance from the feed station and adapted in shape and size to receive a plurality of components, a storage rack for holding a plurality of material carriers, and means for transferring at least one of said components into said material kit carrier, while the material kit carrier is located in the storage rack.

There is therefore a need for a method for rapid and precise distribution of components from a feed station, for example a cutting station, to a large number of kits of material.

### Summary of the Invention

It is therefore an object of the present invention to provide a method and a system for rapid and precise distribution of components from a feed station to a large number of material kit carriers.

The invention is defined by the appended independent claims. Embodiments of the invention will be apparent from the dependent claims and from the following description and the appended drawings.

According to a first aspect, a method for distributing components to material kit carriers is provided, comprising supplying, at a feed station, at least two components and arranging said components in at least one material kit carrier located at a distance from the feed station, such that each of said material kit carriers contains a plurality of components which are adapted to be joined together to form part of a predetermined product. The method further comprises arranging, at the feed station, said at least two components on a common intermediate carrier, moving the intermediate carrier to said material kit carrier, and transferring at least one of said components from the intermediate carrier into said material kit carrier.

By "component" is meant an at least partly machined part, such as for example a sawn, drilled and/or laser cut part of a bar material.

By "material kit carrier" is meant a carrier or collecting unit which is capable of receiving a plurality of components, which together form a material kit that is adapted to be assembled to form a product or part of a product.

By "predetermined product" is meant on the one hand products that are known to the party performing the method, but the predetermined product need only be known to the party performing the method to such a degree that it is possible to carry out the method.

By "at a distance from" is meant that the material kit carrier is situated at such a distance from the feed station that the equipment used to arrange the components on the intermediate carrier cannot be used to arrange the components directly in the material kit carrier instead.

By using intermediate carriers it is possible to distribute a large number of components more rapidly from a plurality of feed stations to a large number of material kit carriers. The components can be moved one at a time from the intermediate carrier to the material kit carrier. Alternatively, a subset of, for example, 2, 3, 4, 5 components positioned on the intermediate carrier can be moved simultaneously to the material kit carrier.

The components can be arranged, at the feed station, on said intermediate carrier by means of a first robot. By "robot" is here meant an automated, usually numerically controlled, mover of goods, with the ability to move goods without being controlled by an operator.

The intermediate carrier can be moved to said material kit carrier by means of a second robot.

The component can be transferred to said material kit carrier by means of a third robot. The third robot can be integrated with and/or supported by the second robot. Alternatively, the second robot can be adapted to carry out both the transport of the intermediate carrier to the material kit carrier and the transfer of the component to the material kit carrier.

The material kit carrier is located in a storage rack when said component is transferred from the intermediate carrier into the material kit carrier. By "storage rack" is meant a structure for storing a plurality of material kit carriers. Thus, the transfer from the intermediate carrier to the material kit carrier may occur at, or immediately adjacent to, a storage site for the material kit carrier. This may be a "permanent" storage site or a storage site which is used until the kit of material is complete.

The component can be placed at a predetermined position in the material kit carrier.

According to another embodiment, said at least two components can be adapted to form part of the same product.

The components can differ substantially from one another in terms of shape, dimension and/or cut-out layout. By "substantially" is here meant that they should differ not only in terms of manufacturing tolerances and manufacturing defects.

At the feed station at least one machining operation can be performed on at least one of said components.

The components can be substantially elongate and have a substantially constant profile shape.

According to a second aspect, a method for manufacturing an agricultural implement is provided, comprising a method according to any one of the preceding claims.

According to a third aspect, a system for distributing components into material kit carriers is provided, comprising a feed station designed to supply at least two components, and at least one material kit carrier located at a distance from the feed station, which material kit carrier is of a shape and size such that it is capable of receiving a plurality of components which are adapted to be joined together to form part of a predetermined product. The system further comprises a storage rack for holding a plurality of material kit carriers. The system further comprises an intermediate carrier of a shape and size such that is it capable of receiving said at least two components, a first robot configured to arrange said components on the intermediate carrier at the feed station, a second robot (7) for automatically moving the intermediate carrier to said material kit carrier, and means for transferring at least one of said components from the intermediate carrier to said material kit carrier while the material kit carrier is located in the storage rack.

The feed station can be arranged to perform at least one machining operation on at least one of said components.

### Brief Description of the Drawings

Fig. 1 is a general view of a materials handling system.
Fig. 2 is a close-up view of a robot for moving components from a cutting machine to an intermediate carrier.
Fig. 3 is a close-up view of a rack for intermediate carriers.
Fig. 4 is a close-up view of an intermediate carrier when components are being transferred to the material kit carrier.
Fig. 5 is a close-up view of a material kit carrier containing a plurality of components.
Fig. 6 shows a frame structure for an agricultural implement.

### Description of Embodiments

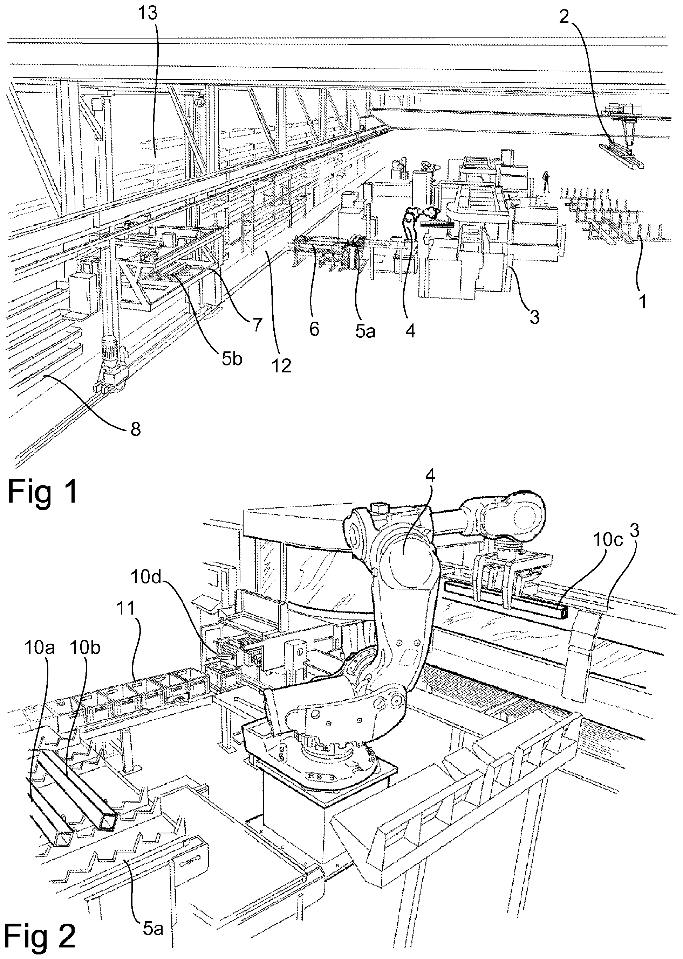

Fig. 1 is a general view of a materials handling system, which comprises a storage area 1 for storing raw material, here in the form of elongate bars or pipes of metal, usually steel; an overhead travelling crane 2 for moving raw material to a cutting station 3 comprising a cutting machine, a robot 4 for moving components 10a, 10b, 10c, 10d cut out in the cutting machine to an intermediate carrier 5a; a rack 6 adapted to receive a plurality of intermediate carriers; a shuttle 7 for moving intermediate carriers 5b to a first storage rack 12, in which a plurality of non-complete material kit carriers 8 are located. A second storage rack 13 is also illustrated in which a plurality of complete material kit carriers are located. The first and second storage racks 12, 13 are arranged relative to each other such that when a material kit carrier is complete, i.e. it contains all the parts that are needed for the assembly stage (where the parts are usually joined by welded joints or screw joints/bolted joints, or alternatively riveted joints) it is transferred from the first storage rack 12 to the second storage rack 13. This can be achieved by means of a separate shuttle (not shown).

The path of displacement of the shuttle 7 can be optimized based on information indicating to which material kit carriers each component is to be transferred, so that the shuttle travels the fastest/shortest possible route.

It is possible to use multiple shuttles 7, which operate more or less independently of each other. However, such a system must ensure that the shuttles will not collide with one another or interfere with each other in any other way.

Fig. 2 is a close-up view of a robot 4 for moving components 10a, 10b, 10c, 10d from a cutting machine to an intermediate carrier. The cutting machine can be a 3D laser cutting machine, which is adapted for elongate workpieces, such as bar material, and which is capable of both cutting the bar material to the right length and, if necessary, cutting holes, slots and the like. Such cutting machines have a very high work capacity.

The robot 4 grabs the components that are output from the cutting machine. If required the robot can shake/turn the components so as to remove any scrap resulting from the cutting process. The robot 4 places the components at predetermined positions in an intermediate carrier 5a, which can be specially designed to receive elongate components 10a, 10b. Furthermore, a plurality of small component carriers 11 can be provided, in which one or several components that are too small to be handled by the intermediate carrier 5a can be placed. A plurality of small component carriers 11 can be arranged on a common special intermediate carrier to be distributed to the respective material kit carriers 8. Alternatively, the intermediate carrier 5a can be adapted to receive not only components but also one or several small component carriers 11.

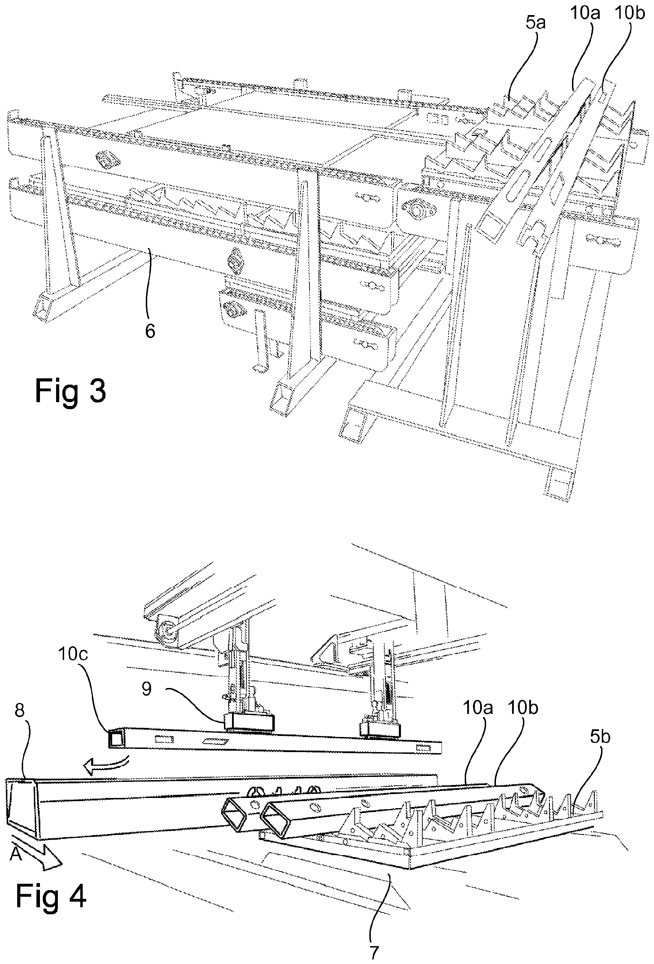

Fig. 3 is a close-up view of a rack 6 for intermediate carriers 5a. The rack 6 can be designed to receive a plurality of empty intermediate carriers, which have been brought back by the shuttle 7.

Fig. 4 illustrates how a component 10c is transferred from the intermediate carrier 5b to a material kit carrier 8. The transfer can be carried out using a manipulator or robot 9, which can be provided with gripping means in the form of a claw clutch or clutches or a magnet or magnets adapted to grab hold of a component on the intermediate carrier 5a and lift it to the material kit carrier 8. The robot 9 can be an integral part of the shuttle 7. As indicated by the arrow A, the material kit carrier may be, but does not have to be, pushed out from the storage rack 12, like a drawer, in order to facilitate the transfer of the component 10c.

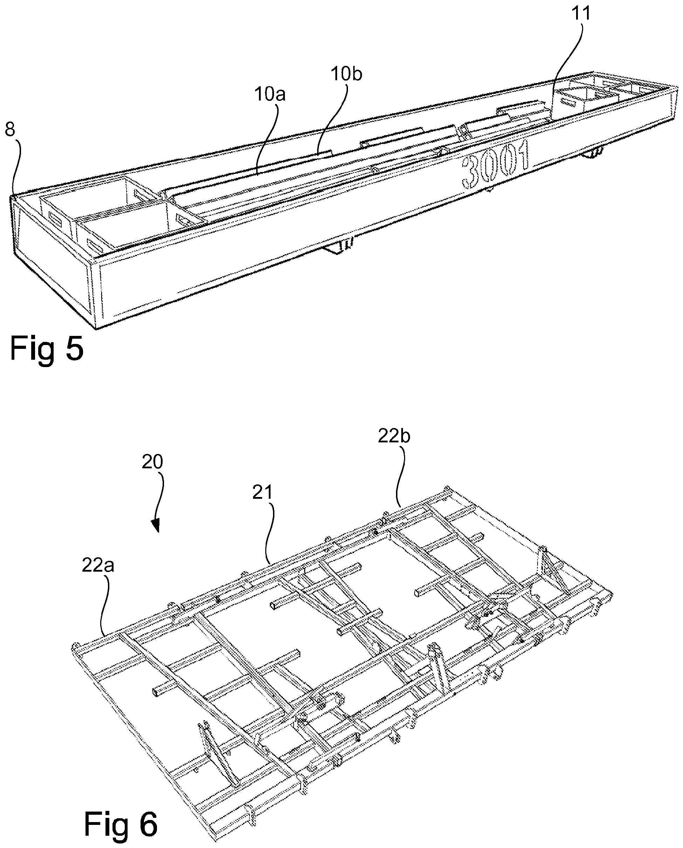

Fig. 5 illustrates a material kit carrier 8 comprising a plurality of components 10a, 10b and a plurality of small component carriers 11. The components 10a, 10b and the small component carriers 11 can be arranged according to a predetermined pattern, preferably determined by the order in which the components are to be removed from the material kit carrier 8 during a subsequent assembly stage. The components can be arranged in one, two or more layers in the material kit carrier, each layer being formed according to a specific pattern.

The material kit carrier can be provided with one or more means of identification, such as a machine-readable label with RFID or barcodes (not shown), and/or a user-readable label in the form of a number or the like.

Fig. 6 illustrates a frame structure 20 for an agricultural implement in the form of a harrow, which frame structure 20 comprises a middle section 21 and unfoldable right and left side sections 22a, 22b, which are formed of a plurality of elongate components, here joined together by welding. In this kind of structure each section 21, 22a, 22b can be formed of components from a respective material kit carrier.

It will be appreciated that the system shown herein is controlled by means of one or more software systems, which controls the movement of each component through the system and which stores information about the location of each individual component in the materials handling system. This means that all operations and movements, all the way from the storage area 1 to the material kit carrier 8, can be performed fully automatically without the assistance of an operator.

The following description will focus on the functioning of the system, the cutting of metal bars, here square-section bars of steel, to form components being used as a non-limiting example.

One or several metal bars is/are collected from the storage area 1 by an overhead travelling crane 2 and is/are fed into a 3D laser cutter 3. Here each metal bar is measured and cutting is planned in a manner that ensures an optimum use of material by analysing which components can be formed from an individual metal bar in accordance with a production program for one or more products.

The metal bar is then cut so that at least two, often more, components 10a, 10b, 10c, 10d are formed. Components 10d that are shorter than a predetermined length are conveyed to small component carriers 11. The other components are gripped by the robot 4, any scrap is emptied out and the components are then placed in the intermediate carrier 5a. This means that the intermediate carrier may contain a plurality of components 10a, 10b which are intended for the same product or which are intended for different products.

When the intermediate carrier 5a contains a predetermined number of components, for example when it is full, it is collected by a shuttle 7. A new intermediate carrier is provided ready to be filled by the robot 4.

The shuttle 7 moves the intermediate carrier 5b to a first location in the first storage rack 12, where a material kit carrier 8 is located. The material kit carrier is pulled out and the shuttle robot 9 lifts a component 10c into a predetermined position in the material kit carrier 8. The robot 9 then lifts any additional components to predetermined positions in the material kit carrier, or pushes the material kit carrier back into the first storage rack 12 and moves on to the next location in the first storage rack 12, where the procedure is repeated with one or several components.

When the intermediate carrier 5b is empty it is returned to the rack 6 and the shuttle 7 fetches a new intermediate carrier.

When a material kit carrier 8 is complete it is transferred to the second storage rack 13. Alternatively, it remains in the first storage rack until it is due for transport to the assembly station.

It will be appreciated that the feed station 3 can be any kind of machining station, or even a sorting station where incoming components are received and distributed among material kit carriers.

It will be further appreciated that the method and system described herein can be used as part of a material supply system in the factory where the assembly of the components is performed. The method and system can also be used as part of a material supply system in which a number of components with certain properties are arranged in a material kit carrier and shipped to another party for the purpose of assembly, without the party performing the method having any detailed knowledge of how the components should be assembled or what the resulting product will look like, as long as the scope of the invention defined by the claims is not exceeded.

## Claims

1. A method for distributing components (10a, 10b, 10c, 10d) into material kit carriers (8), comprising:
supplying, at a feed station (3), at least two components (10a, 10b, 10c, 10d),
performing, at the feed station (3), at least one machining operation on at least one of said components (10a, 10b, 10c, 10d), and
arranging said components (10a, 10b, 10c, 10d) in at least one material kit carrier (8) located at a distance from the feed station (3), such that each of said material kit carriers (8) contains a plurality of said non-assembled components (10a, 10b, 10c, 10d) which are adapted to be joined together to form part of a predetermined product (20),
arranging, at the feed station (3), at least two of said components on a common intermediate carrier (5a, 5b),
moving the intermediate carrier (5a, 5b) to said material kit carrier (8), and
transferring at least one of said components (10a, 10b, 10c, 10d) from the intermediate carrier (5a, 5b) into said material kit carrier (8) while the material kit carrier (8) is located in a storage rack.

2. A method according to claim 1, wherein said components (10a, 10b, 10c, 10d) are arranged, at the feed station (3), on said intermediate carrier (5a, 5b) by means of a first robot (4).

3. A method according to any one of the preceding claims, wherein said intermediate carrier (5a, 5b) is moved to said material kitcarrier (8) by means of a second robot (7).

4. A method according to any one of the preceding claims, wherein said component (10a, 10b, 10c, 10d) is transferred into said material kit carrier (8) by means of a third robot (9).

5. A method according to any one of the preceding claims, wherein said component (10a, 10b, 10c, 10d) is placed at a predetermined position in the material kit carrier (8).

6. A method according to any one of the preceding claims, wherein said at least two components (10a, 10b, 10c, 10d) differ substantially from one another in terms of shape, dimension and/or cut-out layout.

7. A method according to any one of the preceding claims, wherein said components (10a, 10b, 10c, 10d) are substantially elongate and have a substantially constant profile shape.

8. A method for manufacturing an agricultural implement (20), comprising a method according to any one of the preceding claims.

9. A system for distributing components (10a, 10b, 10c, 10d) into material kit carriers (8), comprising:
a feed station (3) designed to supply at least two non-assembled components (10a, 10b, 10c, 10d) and to perform at least one machining operation on at least one of said components (10a, 10b, 10c, 10d), and
at least one material kit carrier (8) located at a distance from the feed station (3) and adapted in shape and size to receive a plurality of components (10a, 10b, 10c, 10d) which are adapted to be joined together to form part of a predetermined product (20), and
a storage rack for holding a plurality of material kit carriers,
an intermediate carrier (5a, 5b), which is adapted in size and shape to receive said at least two of said components (10a, 10b, 10c, 10d),
a first robot (4) configured to arrange said components on the intermediate carrier at the feed station (3),
a second robot (7) for automatically moving the intermediate carrier (5a, 5b) to said material kit carrier (8), and
means (9) for transferring at least one of said components (10a, 10b, 10c, 10d) from the intermediate carrier (5a, 5b) into said material kit carrier (8) while the material kit carrier (8) is located in the storage rack.

## Patentansprüche

1. Verfahren zum Verteilen von Komponenten (10a, 10b, 10c, 10d) in Materialkitträger (8), umfassend:
Zuführen, an einer Zuführstation (3), von mindestens zwei Komponenten (10a, 10b, 10c, 10d),
Durchführen, an der Zuführstation (3), mindestens eines Bearbeitungsvorgangs auf mindestens einer der Komponenten (10a, 10b, 10c, 10d) und
Anordnen der Komponenten (10a, 10b, 10c, 10d) in mindestens einem Materialkitträger (8), der sich in einem Abstand von der Zuführstation (3) befindet, so dass jeder der Materialkitträger (8) mehrere nicht zusammengesetzte Komponenten (10a, 10b, 10c, 10d) enthält, die angepasst sind, um zusammengefügt zu werden, um einen Teil eines vorbestimmten Produkts (20) zu bilden,
Anordnen, an der Zuführstation (3), mindestens zwei der Komponenten auf einem gemeinsamen Zwischenträger (5a, 5b),
Bewegen des Zwischenträgers (5a, 5b) zu dem Materialkitträger (8) und Übertragen mindestens einer der Komponenten (10a, 10b, 10c, 10d) von dem Zwischenträger (5a, 5b) in den Materialkitträger (8), während sich der Materialkitträger (8) in einem Lagerregal befindet.

2. Verfahren nach Anspruch 1, wobei die Komponenten (10a, 10b, 10c, 10d), an der Zuführstation (3), auf dem Zwischenträger (5a, 5b) mittels eines ersten Roboters (4) angeordnet werden.

3. Verfahren nach einem der vorhergehenden Ansprüche, wobei der Zwischenträger (5a, 5b) zu dem Materialkitträger (8) mittels eines zweiten Roboters (7) bewegt wird.

4. Verfahren nach einem der vorhergehenden Ansprüche, wobei die Komponente (10a, 10b, 10c, 10d) in den Materialkitträger (8) mittels eines dritten Roboters (9) übertragen wird.

5. Verfahren nach einem der vorhergehenden Ansprüche, wobei die Komponente (10a, 10b, 10c, 10d) an einer vorbestimmten Position in dem Materialkitträger (8) platziert wird.

6. Verfahren nach einem der vorhergehenden Ansprüche, wobei sich die mindestens zwei Komponenten (10a, 10b, 10c, 10d) im Wesentlichen hinsichtlich Form, Abmessung und/oder Ausschnitt-Layout voneinander unterscheiden.

7. Verfahren nach einem der vorhergehenden Ansprüche, wobei die Komponenten (10a, 10b, 10c, 10d) im Wesentlichen länglich sind und eine im Wesentlichen konstante Profilform haben.

8. Verfahren zum Herstellen eines landwirtschaftlichen Geräts (20), umfassend ein Verfahren nach einem der vorhergehenden Ansprüche.

9. System zum Verteilen von Komponenten (10a, 10b, 10c, 10d) in Materialkitträger (8), umfassend:
eine Zuführstation (3), die ausgelegt ist, um mindestens zwei nicht zusammengesetzte Komponenten (10a, 10b, 10c, 10d) zuzuführen und um mindestens einen Bearbeitungsvorgang auf mindestens einer der Komponenten (10a, 10b, 10c, 10d) durchzuführen, und
mindestens einen Materialkitträger (8), der sich in einem Abstand von der Zuführstation (3) befindet und in Form und Größe angepasst ist, um mehrere Komponenten (10a, 10b, 10c, 10d) aufzunehmen, die angepasst sind, um zusammengefügt zu werden, um einen Teil eines vorbestimmten Produkts (20) zu bilden, und
ein Lagerregal zum Halten von mehreren Materialkitträgern,
einen Zwischenträger (5a, 5b), der in Größe und Form angepasst ist, um mindestens zwei der Komponenten (10a, 10b, 10c, 10d) aufzunehmen,
einen ersten Roboter (4), der konfiguriert ist, um die Komponenten auf dem Zwischenträger an der Zuführstation (3) anzuordnen,
einen zweiten Roboter (7), zum automatischen Bewegen des Zwischenträgers (5a, 5b) zu dem Materialkitträger (8) und
Mittel (9) zum Übertragen mindestens einer der Komponenten (10a, 10b, 10c, 10d) von dem Zwischenträger (5a, 5b) in den Materialkitträger (8), während sich der Materialkitträger (8) in dem Lagerregal befindet.

## Revendications

1. Procédé de distribution de composants (10a, 10b, 10c, 10d) dans des supports de kits de matériaux (8), comprenant :
la fourniture dans une station d'alimentation (3) d'au moins deux composants (10a, 10b, 10c, 10d),
la réalisation, à la station d'alimentation (3), d'au moins une opération d'usinage sur au moins un desdits composants (10a, 10b, 10c, 10d), et
la disposition desdits composants (10a,10b, 10c, 10d) dans au moins un support de kits de matériaux (8) situé à une distance de la station d'alimentation (3) telle que chacun desdits supports de kits de matériaux (8) contienne une pluralité dédits composants (10a, 10b, 10c, 10d) non assemblés et qui sont aptes à être joints pour former une partie d'un produit prédéterminé (20),
la disposition dans la station d'alimentation (3) d'au moins deux desdits composants sur un support intermédiaire commun (5a, 5b),
le déplacement du support intermédiaire (5a,5b) vers ledit support de kits de matériaux (8), et
le transfert d'au moins un desdits composants (10a, 10b, 10c, 10d) depuis le support intermédiaire (5a, 5b) dans ledit support de kits de matériaux (8) pendant que le support de kits de matériaux (8) se trouve dans un rayon de stockage.

2. Procédé selon la revendication 1, dans lequel lesdits composants (10a, 10b, 10c, 10d) sont disposés, dans la station d'alimentation (3), sur ledit support intermédiaire (5a,5b) au moyen d'un premier robot (4).

3. Procédé selon l'une quelconque des revendications précédentes, dans lequel ledit support intermédiaire (5a,5b) est déplacé dans ledit support de kits de matériaux (8) au moyen d'un deuxième robot (7).

4. Procédé selon l'une quelconque des revendications précédentes, dans lequel ledit composant (10a, 10b, 10c, 10d) est transféré dans ledit support de kits de matériaux (8) au moyen d'un troisième robot (9).

5. Procédé selon l'une quelconque des revendications précédentes, dans lequel ledit composant (10a, 10b, 10c, 10d) est placé à une position prédéterminée dans le support de kits de matériaux (8).

6. Procédé selon l'une quelconque des revendications précédentes, dans lequel lesdits au moins deux composants (10a, 10b, 10c, 10d) diffèrent sensiblement l'un de l'autre en termes de forme, dimension et/ou conception de découpe.

7. Procédé selon l'une quelconque des revendications précédentes, dans lequel lesdits composants (10a, 10b, 10c, 10d) sont substantiellement allongés et ont une forme de profil substantiellement constante.

8. Procédé de fabrication d'un instrument agricole (20), comprenant un procédé selon l'une quelconque des revendications précédentes.

9. Système de distribution de composants (10a, 10b, 10c, 10d) dans des supports de kits de matériaux (8), comprenant :
une station d'alimentation (3) conçue pour fournir au moins deux composants (10a, 10b, 10c, 10d) non assemblés et pour réaliser au moins une opération d'usinage sur au moins un desdits composants (10a, 10b, 10c, 10d), et
au moins un support de kits de matériaux (8) situé à une distance de la station d'alimentation (3) est apte par sa forme et sa taille à recevoir une pluralité de composants (10a, 10b, 10c, 10d) qui sont aptes à être joints pour former une partie d'un produit prédéterminé (20),
un rayon de stockage pour retenir une pluralité de supports de kits de matériaux,
un support intermédiaire (5a, 5b) qui est apte par sa taille et sa forme à recevoir lesdits au moins deux desdits composants (10a, 10b, 10c, 10d),
un premier robot (4) conçu pour disposer lesdits composants sur le support intermédiaire dans la station d'alimentation (3),
un second robot (7) pour déplacer automatiquement le support intermédiaire (5a,5b) vers ledit support de kits de matériaux (8), et
un moyen (9) de transfert d'au moins un desdits composants (10a, 10b, 10c, 10d) depuis le support intermédiaire (5a, 5b) dans ledit support de kits de matériaux (8) pendant que le support de kits de matériaux (8) se trouve dans le rayon de stockage.
